# EUROPEAN PATENT APPLICATION

(11) **EP 4 848 577 A1**
(43) Date of publication of application: **02.12.2026**
(21) Application number: 26171140.2
(22) Date of filing: 08.04.2026
(51) Int. Cl.: H02P 25/22, B60L 58/22, H02P 5/74, H02P 6/04, H02P 29/024, H02P 29/028

(54) **MOTOR-DRIVEN PROPULSOR AND MOBILITY APPARATUS INCLUDING THE SAME**

(30) Priority: 30.05.2025 KR 20250071314
(71) Applicant: Hyundai Motor Company, Seoul 06797 (KR); Kia Corporation, Seoul 06797 (KR)
(72) Inventor: HWANG, Yun Kyung, 18280 Hwaseong-si, Gyeonggi-do (KR); LEE, Sung Ho, 18280 Hwaseong-si, Gyeonggi-do (KR); CHOI, Jong Hun, 18280 Hwaseong-si, Gyeonggi-do (KR)
(74) Representative: Viering, Jentschura & Partner mbB Patent- und Rechtsanwälte

(57) **Abstract**

Disclosed herein a propulsor and mobility apparatus including the same. The propulsor includes: a motor including a stator including a first group winding and a second group winding and a rotor; and at least one processor to control the motor. The at least one processor is configured to: determine whether a first battery voltage applied to the first group winding exceeds a second battery voltage applied to the second group winding; generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and control the motor based on the first torque command and the second torque command.

## Description

### FIELD OF TECHNOLOGY

The present disclosure relates to a motor-driven propulsor and a mobility apparatus including the same, and more particularly, to a motor-driven propulsor that prevents abnormal operation of a motor in advance to ensure flight stability and the mobility apparatus including the same.

### BACKGROUND

In recent years, aircraft for rapid movement of people and cargo in dense urban areas, short-distance sections, or the like have been developed. In order for aircraft to operate in urban areas, requirements such as excellent low-noise properties and environmental friendliness compared to existing aircraft are emerging. Accordingly, various developments have been made on aviation systems for satisfying the above-mentioned requirements. Aircraft using environmentally friendly energy mainly employ a powertrain system using an electric battery as an energy source.

To this end, the aircraft may be provided with a motor propulsor driven by the power of an electric battery. The electric battery and the motor propulsor may be designed to have a redundancy configuration for stable flight. Specifically, the motor propulsor may include a dual three-phase motor and a dual inverter connected to each three-phase winding. In addition, a plurality of batteries are provided, and each battery may supply power to each three-phase winding of the motor.

The dual inverter and the plurality of batteries are independent of each other, and outputs of individual inverters may not be the same. Accordingly, power consumptions of the batteries may be different, and states of charge of the batteries may also be different. In addition, voltages output by individual batteries may be also different. When some batteries output a voltage below a minimum operating voltage, an inverter connected to the batteries may not be operated. A three-phase winding of a motor connected to an inverter that is not operated may not receive an electric current, and the output torque and rotational speed of the motor may rapidly decrease. An abnormal state of the motor due to non-operation of the inverter may impair flight stability of the aircraft.

### SUMMARY

Various aspects of the present disclosure is to provide a motor-driven propulsor that prevents abnormal operation of a motor in advance and ensures flight stability and a mobility apparatus including the same.

The various aspects to be solved by the present disclosure are not limited to the above-mentioned technical problems, and other technical problems that are not mentioned will be clearly understood by those skilled in the art from the following description.

That is, the present disclosure provides a propulsor with the features according to claim 1 and a mobility apparatus with the features according to claim 11. Further preferred embodiments of the propulsor and mobility apparatus are described in the respective dependent claims.

According to one aspect of the present disclosure, there is provided a propulsor comprising: a motor including a stator including a first group winding and a second group winding to have a dual three-phase structure and a rotor generating rotation through an electromagnetic interaction with the stator; and at least one processor executing at least one instruction to control the motor. The at least one processor is configured to: determine whether a first battery voltage applied to the first group winding exceeds a second battery voltage applied to the second group winding; generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and control the motor based on the first torque command and the second torque command.

For some implementations, the first battery voltage and the second battery voltage may be determined based on a first state of charge of a first battery and a second state of charge of a second battery, respectively.

For some implementations, in the determining whether the first battery voltage may exceed the second battery voltage, the at least one processor is configured to determine whether the first battery voltage exceeds a sum of the second battery voltage and a threshold voltage.

For some implementations, in the generating the first torque command and the second torque command, the at least one processor may be configured to: generate an adjustment torque signal based on the first battery voltage and the second battery voltage to have the first torque greater than the second torque; and generate the first torque command and the second torque command based on a first torque signal corresponding to the first group winding, a second torque signal corresponding to the second group winding, and the adjustment torque signal, and the first torque signal and the second torque signal are provided based on a speed command for operation of the motor.

For some implementations, the first torque signal and the second torque signal may be provided as signals having a same torque, and the first torque command may be generated by adding the adjustment torque signal to the first torque signal, and the second torque command is generated by subtracting the adjustment torque signal from the second torque signal.

For some implementations, in the generating the first torque command and the second torque command, the at least one processor may be configured to generate the first torque command and the second torque command using proportional-integral control.

For some implementations, the at least one processor may be further configured to generate, based on the first battery voltage and the second battery voltage being equal, a first torque command and a second torque command in consideration of a first torque signal and a second torque signal that are each provided according to a speed command for operation of the motor; and the first torque signal and the second torque signal correspond to the first group winding and the second group winding, respectively.

For some implementations, in the controlling the motor, the at least one processor may be configured to: generate, based on the first torque command and the second torque command, a first phase voltage command corresponding to the first group winding and a second phase voltage command corresponding the second group winding; and control the motor based on the first phase voltage command and the second phase voltage command.

For some implementations, a first battery outputting the first battery voltage and a second battery outputting the second battery voltage may be comprised of homogeneous batteries that are not charged by a power source internal to an apparatus including the propulsor.

For some implementations, at least one of the first battery outputting the first battery voltage and the second battery outputting the second battery voltage may be configured to be charged by a power source internal to an apparatus including the propulsor. The at least one processor may be further configured to: determine whether at least one of the first battery and the second battery is charged by the power source; and determine, based on at least one of the first battery and the second battery being charged by the power source, whether a first battery predicted voltage applied to the first group winding exceeds a second battery predicted voltage applied to the second group winding; and generate, based on the first battery predicted voltage exceeding the second battery predicted voltage, a first torque command and a second torque command in consideration of the first predicted battery voltage and the second predicted battery voltage to have the first torque that is set to be greater than the second torque. The at least one of the first battery predicted voltage and the second battery predicted voltage may be determined based on a predicted state of charge of a battery in accordance with charging with the power source.

According to another aspect of the present disclosure, there is provided a mobility apparatus comprising: a propulsor including a motor including a stator including a first group winding and a second group winding to have a dual three-phase structure and a rotor generating rotation through an electromagnetic interaction with the stator, the propulsor being disposed on a body and generating lift and thrust; a first battery and a second battery supplying power to the propulsor; and at least one processor executing at least one instruction to control the propulsor, the first battery, and the second battery. The at least one processor is configured to: determine whether a first battery voltage applied to the first group winding exceeds a second battery voltage applied to the second group winding; generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and control the motor based on the first torque command and the second torque command.

The features briefly summarized above the present disclosure are merely exemplary aspects of the detailed description of the present disclosure described below and do not limit the scope of the present disclosure.

### BRIEF DESCRIPTION OF THE DRAWINGS

FIG. 1 shows a schematic diagram illustrating modules commonly included in various types of movable mobility apparatuses.
FIG. 2 shows a diagram illustrating an air mobility apparatus according to an example of the present disclosure.
FIG. 3 shows a diagram illustrating an air mobility apparatus implementing a hovering mode as an air mobility apparatus according to another example of the present disclosure.
FIG. 4 shows a diagram illustrating an upper portion of an air mobility apparatus implementing a hovering mode.
FIG. 5 shows a diagram illustrating an air mobility apparatus implementing a cruising mode as an air mobility apparatus according to another example of the present disclosure.
FIG. 6 shows a schematic diagram illustrating modules constituting an air mobility apparatus according to an embodiment of the present disclosure.
FIG. 7 shows a diagram illustrating an air mobility apparatus according to an embodiment of the present disclosure.
FIG. 8 shows a diagram illustrating a layout of an energy supply architecture between a power source unit and a propulsor.
FIG. 9 shows a diagram illustrating module and motor control of a propulsor.
FIG. 10 shows a flowchart illustrating one control process of a motor-driven propulsor according to an embodiment of the present disclosure.
FIG. 11 shows a flowchart illustrating another control process of a motor-driven propulsor according to an embodiment of the present disclosure.
FIG. 12 shows a diagram illustrating a speed command and an output speed of a motor applied to a simulation for motor control of the present disclosure in which torque adjustment is performed and motor control of a conventional example in which torque adjustment is not performed.
FIGS. 13 and 14 show diagrams illustrating inverter torque for each three-phase winding of a motor and use amount of each battery as simulation results of a conventional example.
FIGS. 15 and 16 show diagrams illustrating inverter torque for each three-phase winding of a motor and use amount of each battery as simulation result of the present disclosure.

### DETAILED DESCRIPTION

Hereinafter, exemplary embodiments of the present disclosure will be described in detail with reference to the accompanying drawings so that those skilled in the art may easily implement the present disclosure. However, the present disclosure may be implemented in various different ways, and is not limited to the embodiments described therein.

In describing exemplary embodiments of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an embodiment could be termed a second element in another embodiment, and, similarly, a second element in an embodiment could be termed a first element in another embodiment, without departing from the scope of the present disclosure.

In the present disclosure, elements that are distinguished from each other are for clearly describing each feature, and do not necessarily mean that the elements are separated. That is, a plurality of elements may be integrated in one hardware or software unit, or one element may be distributed and formed in a plurality of hardware or software units. Therefore, even if not mentioned otherwise, such integrated or distributed embodiments are included in the scope of the present disclosure.

In the present disclosure, elements described in various embodiments do not necessarily mean essential elements, and some of them may be optional elements. Therefore, an embodiment composed of a subset of elements described in an embodiment is also included in the scope of the present disclosure. In addition, embodiments including other elements in addition to the elements described in the various embodiments are also included in the scope of the present disclosure.

The advantages and features of the present invention and the way of attaining them will become apparent with reference to embodiments described below in detail in conjunction with the accompanying drawings. Embodiments, however, may be embodied in many different forms and should not be constructed as being limited to example embodiments set forth herein. Rather, these embodiments are provided so that this disclosure will be complete and will fully convey the scope of the invention to those skilled in the art.

In the present disclosure, each of phrases such as "A or B", "at least one of A and B", "at least one of A or B", "A, B or C", "at least one of A, B and C", ""at Each of the phrases such as "at least one of A, B or C" and "at least one of A, B, C or combination thereof" may include any one or all possible combinations of the items listed together in the corresponding one of the phrases.

In the present disclosure, expressions of location relations used in the present specification such as "upper", "lower", "left" and "right" are employed for the convenience of explanation, and in case drawings illustrated in the present specification are inversed, the location relations described in the specification may be inversely understood.

Hereinafter, embodiments of the present disclosure will be described with reference to the accompanying drawings.

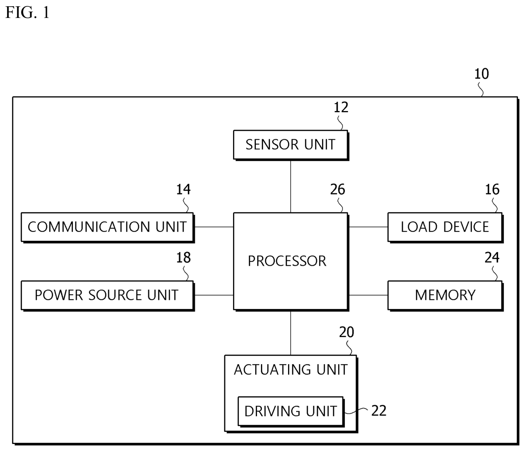

Hereinafter, FIG. 1 shows a schematic diagram illustrating modules commonly included in various types of movable mobility apparatuses.

The mobility apparatus 10 may be a vehicle having mobility in the present disclosure. The mobility may carry a person, an object for a specific purpose, and/or a baggage while moving from one point to a specific point. In other words, the mobility apparatus 10 may move for transportation and other purposes. Another purpose is, for example, to detect or monitor an environment around the mobility apparatus 10 while an observation device is mounted. For a more specific example, the mobility apparatus may be mounted with a camera to photograph or analyze the surrounding environment and transmit the photographed or analyzed image to a predetermined apparatus. The mobility apparatus 10 is not limited to the above-described example and may be used for various purposes.

The mobility apparatus 10 may travel through spaces corresponding ground, underground, air, outer space, sea, and/or underwater, depending on the space it travels. The mobility apparatus 10 on the ground or the underground may be provided in a form of, for example, a vehicle, a robot, or the like, and the mobility apparatus 10 in the air or the outer space may be provided as an air mobility apparatus, for example, in a form of a conventional fixed-wing or rotary-wing aircraft, an advanced air mobility (AAM) that is actively developed in recent years, a mobility means mounted on an unmanned airplane or a drone, a rocket, or an artificial satellite, or the like. The mobility apparatus 10 on the sea or the underwater may be, for example, a ship, a submarine, or the like. The mobility apparatus 10 is not limited to a specific space and may be a moving body capable of moving all of the above-described spaces, that is, a moving body that is mutually movable to a plurality of spaces, for example, an amphibious vehicle, a flight-capable vehicle, or the like

In addition, the mobility apparatus 10 may be moved through manual operation, autonomy control, or a combination thereof. The manual operation may be implemented by a driver or operator through an interface such as a steering device provided in the mobility apparatus 10 or may be implemented by remote control by a control station or an external control station. The autonomy control, that is, the autonomous movement, may be carried out by independent processing of the mobility apparatus 10 or may be carried out by a combination of remote control through a control station and collaborative processing with the control station of the mobility apparatus 10.

Meanwhile, the mobility apparatus 10 operated in various forms may be designed differently according to intended uses, moving spaces, driving modes, control modes, and the like but may have common functional modules as illustrated in FIG. 1 from a comprehensive viewpoint such as mobility. FIG. 1 mainly describes common functions in various types of mobility apparatus 10. Accordingly, unique functional modules utilized in each type are omitted, but it goes without saying that the embodiments of the present disclosure do not exclude modules omitted in the mobility apparatus 10 of FIG. 1, and they are not excluded from the scope of rights according to the embodiment.

The mobility apparatus 10 may include a sensor unit 12, a communication unit 14, and a load device 16.

The sensor unit 12 may include various types of detectors that detect various states and situations occurring in the external and internal environments of the mobility apparatus 10. The sensor unit 12 may include a positioning sensor that grasps position information of the mobility apparatus 10. In other words, the sensor unit 12 includes different types of sensors and is able to obtain sensing data detected from each sensor. The sensor unit 12 may acquire sensor data used for movement control, state data for detecting a state of a module constituting the mobility apparatus 10, situation data for detecting a situation of a passenger and/or a luggage, and the like. The sensor unit 12 may provide the data to a processor 26 that induces a predetermined function and operation. In the present disclosure, the movement control may be at least one of operation controls related to linear movement, turning, acceleration and deceleration of the mobility apparatus 10, attitude control, braking, hovering, and the like of the mobility apparatus 10. In the present disclosure, hovering may be control in which a thrust is generated in a downward or vertical direction with respect to the mobility apparatus 10, causing a predetermined operation or movement of the mobility apparatus 10. The predetermined action or movement may be, for example, a takeoff, a landing, or a substantially stationary flight within a limited range, or the like. The above-described data of the sensor unit 12 is merely exemplary and may further include sensor data for detecting various situations not that are not listed here.

The communication unit 14 may support mutual communication with other devices to exchange data with other external devices. The other devices may be, for example, servers that control the mobility apparatus 10 or exchange data related to movement control of the mobility apparatus 10, ancillary devices for supporting movement, other mobility apparatuses, and the like. The servers may be referred to by various terms such as a traffic control apparatus, a management apparatus, a control apparatus, and the like. The communication unit 14 may transmit data generated or stored during movement to other devices and may receive data and software modules transmitted from the other devices. A protocol applied to the communication unit 14 is determined according to the type of the mobility apparatus 10, and for example, the communication unit 14 may perform communication with other vehicles or other devices based on cellular communication, wireless access in vehicular environment (WAVE) communication, dedicated short range communication (DSRC) or short range communication, or other communication schemes. The communication protocols and schemes listed above are exemplary and are not limited thereto.

The load device 16 is mounted on the mobility apparatus 10 and may be an ancillary device that consumes electric power supplied from a power source unit 18 or converted from the output of the power source unit 18 by a user's utilization or an instruction required for managing a luggage. The load device 16 may be a type of non-mobile electric device except for a mobile power system used in a driving unit 22 and the like in the present disclosure. The load device 16 may be, for example, a display system, an air conditioning system, a lighting system, a seat system, and various devices installed in the mobility apparatus 10.

Although not shown in FIG. 1, the mobility apparatus 10 may include an interface receiving a request for movement control and operation of the load device 16. The interface may be implemented as a hardware device, a software interface, or the like. The hardware interface is a hardware manipulator for a movement operation required by a user of the mobility apparatus 10, and may be, for example, an air control stick, a ground steering wheel, a ground pedal, a button, a marine steering handler, or the like but is not limited thereto. The software interface may be, for example, a display allowing for touch input but is not limited thereto.

In addition, the mobility apparatus 10 may include a power source unit 18, an actuating unit 20, and a driving unit 22.

The power source unit 18 may generate and supply power and electric power to be used by a mobile power system such as the driving unit 22 and the load device 16. The mobility apparatus 10 may generate energy by at least one of various energy sources. When the mobility apparatus 10 is driven by electric energy, the power source unit 18 may be configured with, for example, an electric battery or may be configured with a combination of an electric battery and a charging module for charging the battery. When the power source unit 18 is configured with an electric battery alone, the electric battery may be charged from a charging station or another mobility apparatus to supply electric power. In the case of a combination of an electric battery and a charging module, the power source unit 18 may employ at least one of a fuel cell and a fossil energy-based engine as a charging module. The fuel cell may use a material used to generate electric power, for example, hydrogen gas. In the case where the power source unit is an engine, the power source unit 18 includes a generator coupled to the engine, and the generator may convert mechanical energy generated in the engine into electric energy to charge the electric battery by the converted electric energy.

In another example, when the mobility apparatus 10 is driven by fossil energy or nuclear fuel, the power source unit 18 may be configured as an internal combustion engine, a turbine engine, a nuclear fuel-based engine, or the like. In still another example, the mobility apparatus 10 may have a power source unit 18 included in a hybrid form of a fossil energy-based engine and an electric battery. The power source unit 18 in the hybrid form may charge the electric battery by using an output of the engine generated during movement and select either power of the engine or electric power of the electric battery according to a state of the mobility apparatus 10, characteristics of a movement path, a movement situation, or the like to generate a movement driving force of the driving unit 22. In another example, the power source unit 18 in the hybrid form may include an electric battery that is rechargeable by an external source and an engine. The processor 26 may switch to either power of the engine or electric power of the electric battery according to various situations and states to apply energy to the driving unit 22, thereby generating a movement driving force.

The actuating unit 20 may include at least one module that implements a movement operation. When the mobility apparatus 10 is an air mobility apparatus, the actuating unit may include a mechanical and software component that performs at least one of control of a flight attitude, hovering control related to takeoff and landing, altitude change control, and turning operation control. The flight attitude may be related to a roll, a yaw, and a pitch of the air mobility apparatus. When the mobility apparatus 10 is a ground mobility apparatus, the actuating unit 20 may include, for example, a mechanical and software component that implements at least one traveling operation of longitudinal control such as acceleration and deceleration and lateral control such as steering. In the present disclosure, the actuating unit 20 may also be referred to as an actuator.

The actuating unit 20 may include a driving unit 22. The driving unit 22 is a module for externally implementing operations such as linear movement, turning, acceleration and deceleration of the mobility apparatus 10, attitude control, braking, and hovering of the mobility apparatus 10 and may be implemented in various forms according to the type of the mobility apparatus 10. When the mobility apparatus 10 is a common air mobility apparatus, the driving unit of the fixed-wing air mobility apparatus may be a turbine engine, a flap, or the like installed at a main wing, a tail wing, or the like to implement operations related to thrust and lift of the air mobility apparatus.

In another example, the fixed-wing air mobility apparatus may further include a propulsor such as a propeller in a predetermined portion of the main wing. The driving unit 22 of a typical rotary-wing air mobility apparatus may be a rotor type propulsor, a flap, or the like installed on an upper portion of the fuselage and the tail wing. A typical air mobility apparatus may include a wheel such as a landing gear required for takeoff and landing according to specifications, and the wheel may be accommodated into the fuselage during flight.

The AAM type driving unit 22 may include a rotor type propulsor or a flap, similar to the rotary wing air mobility apparatus. The propulsor applied to the AAM type may be fixed at least to the main wing in a non-tilting manner or may be installed at least at the main wing in a tiltable manner. As another example, a plurality of propulsors applied to an AAM type may also be installed inside the main wing. In addition, the driving unit 22 an AAM type may also be configured to rotate the wing to which the propulsor is coupled, within a predetermined range of angle. The driving unit 22 of an AAM type may include wheels such as landing gears that are accommodated into the fuselage during flight and pulled out at takeoff and landing according to specifications.

When the air mobility apparatus of the AAM type is driven by electrical energy, the driving unit 22 may include a motor and an inverter which rotate a propeller mainly by electrical power. When the air mobility apparatus of the AAM types is driven by a non-electrical energy, for example by fossil energy, the driving unit 22 may include modules for transmitting the rotational force generated mainly in the internal combustion engine to the propeller.

When the mobility apparatus 10 is a ground mobility, the driving unit 22 may include a plurality of wheels, a driving force transmission module for generating a driving force and applying or transmitting the driving force to the wheels, a braking module for decelerating the driving of the wheels, and a steering module for implementing lateral control of the wheels. The wheels, the driving force transmission module, the braking module, and the like may constitute a driving assembly, and a plurality of driving assemblies may be provided according to the number of wheels. When the ground mobility apparatus is driven by electric energy, the driving force transmission module may be configured as a motor module generating a driving force based on power output from an electric battery. When the ground mobility apparatus is operated by fossil energy, the driving force transmission module may include a transmission and a gear module that transmit power of an internal combustion engine.

When the mobility apparatus 10 is a marine or underwater mobility, the driving unit 22 may include a steering rudder, a propeller for a propulsor, a module for transmitting power and predetermined motion thereto, and the like.

In addition, the mobility apparatus 10 may include a memory 24 and a processor 26.

The memory 24 may store an application and various types of data for controlling the mobility apparatus 10 and may load the application or read and write the data according to a request of the processor 26. The application and the data are different according to the type and detailed specifications of the mobility apparatus 10 and may include sensor data related to movement control, state data of mobility related to the movement control, data received from another device, and data related to energy control between the power source unit 18 and the driving unit 22. In addition, the application and the data may include data related to control of a module in charge of a function other than the above-described control, software related to operation of a computing system of mobility, information and an application for autonomous movement, path information, various information and control programs for passenger convenience, and the like.

In the present disclosure, the processor 26 may process movement control, path control, energy control, control of the load device 16, autonomous movement control, convenience function control, and the like by using applications, instructions, and data stored in the memory 24. The processor 26 may also have different control processes according to the type and detailed specifications of the mobility apparatus 10. The processor 26 may be implemented, for example, as a single processing module. For another example, processing according to the above-described matters may be performed in a distributed manner in a plurality of processing modules, and a plurality of processing modules may also be collectively referred to as the processor 26 in the present disclosure.

Hereinafter, an air mobility apparatus according to an embodiment of the present disclosure will be described. Specifically, in the present disclosure, an AAM type air mobility apparatus is mainly described among various types of air mobility apparatus. Although an AAM type of air mobility apparatus is described, the description is also applicable to other types of air mobility apparatus as long as the functions, modules, and devices of the air mobility apparatus described in the present disclosure are technically combinable. Broadly, the description is also applicable to ground, underground, outer space, marine, and underwater mobility apparatuses as long as the functions, modules, and devices of the air mobility apparatuses described in the present disclosure are technically combinable.

The AAM type air mobility apparatuses may be classified into vertical take-off and landing (VTOL) type, short take-off and landing (STOL) type, conventional take-off and landing (CTOL) type, and the like according to a take-off and landing method. The VTOL may be an air mobility apparatus that can take off and land vertically without a runway, the STOL may be an air mobility apparatus that can take off and land with a relatively short runway or at a low speed, and the CTOL may be an air mobility apparatus that can take off and land with a longer runway or at a higher speed compared to the STOL. In addition, the VTOL may be classified into a vectored thrusted (or tilting rotor) method, a lift-and-cruise method, a multicopter method, and the like, according to a propulsion method. In the case of the tilting rotor method, at least a part of a plurality of propulsors may be tilted to be fully utilized for hovering and cruising.

In the present disclosure, flight control according to the hovering mode may be a control that generates a thrust to be directed downward or vertically with respect to the fuselage of the air mobility apparatus, thereby inducing a predetermined operation in the mobility apparatus 10. The predetermined operation may be, for example, takeoff, landing, or substantially stationary flight within a limited range. Flight control according to the cruising mode may be a control related to forward flight, horizontal flight, or the like. The lift-and-cruise method may separately include a hovering propulsor and a cruising propulsor without tilting the rotor according to the flight mode. The multicopter method may include a plurality of propulsors arranged in the horizontal direction of the fuselage, similar to a drone, and may implement takeoff and landing and cruising flight through attitude control of the fuselage.

Although the present disclosure mainly describes a VTOL air mobility apparatus having a motor type propulsor and having a vector thrust mode, the functions, modules, and devices of the air mobility apparatus described in the present disclosure are applicable to other types of air mobility apparatuses as long as they are technically combinable.

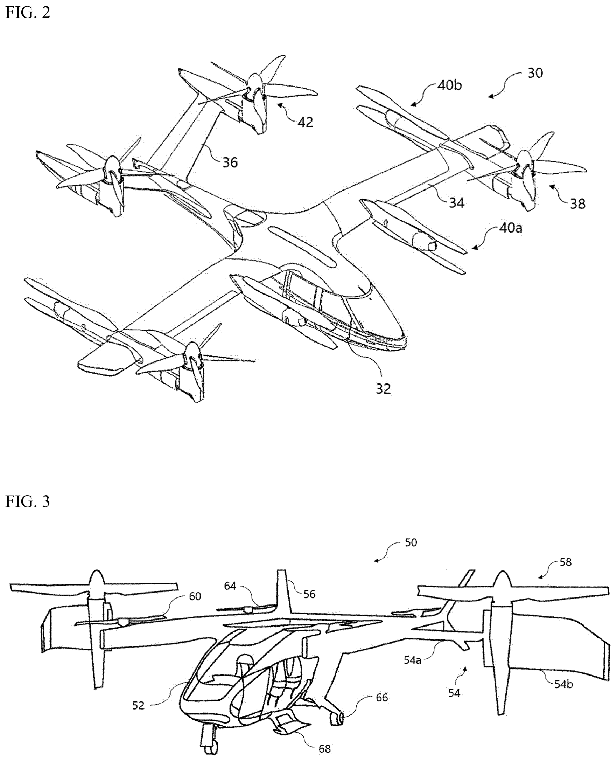

FIG. 2 shows a diagram illustrating an air mobility apparatus according to an example of the present disclosure.

An air mobility apparatus 30 according an embodiment may include a streamlined fuselage 32, main wings 34 disposed on left and right sides of a central region of the fuselage 32, and a tail wing 36 disposed in an end region of the fuselage. The fuselage 32 may have, for example, a cabin in which a pilot and a passenger board and a space in which a baggage is loaded. The main wing 34 and the tail wing 36 may be configured as fixed wings.

The main wing 34 may have an inboard region and an outboard region. The main wing tilting propulsor 38 having a tilting rotor may be disposed in a front region of the left and right outboards. Main wing non-tilting propulsors 40a and 40b arranged in the horizontal direction of the fuselage 32 may be disposed in the left and right inboard regions and the rear regions of the left and left outboards and may also be referred to as lift propulsors. In addition, a tail wing tilting propeller 42 having a tilting rotator may be disposed at an end of the tail wing.

Each of the above-described propulsors may include a propeller having a plurality of blades, a hub having a shaft to which an end of each blade is coupled, a motor that supplies a rotational force to the shaft, an inverter that adjusts electric power or converts electric power form of the power source unit 18 based on a flight situation, a motor specification, or the like, a propulsor cooling module that cools the motor and the inverter, and the like.

The main wing tilting propulsor 38 and the tail wing tilting propulsor 42 may include a nacelle that accommodates and covers the above-described members. The main wing tilting propulsor 38 or the tail wing tilting propulsor 42 may be fixed to the main wing and the tail wing by hinge coupling between a boom protruding from the main wing outboard region and the end of the tail wing and the nacelle, and may be tilted with respect to the boom. In the present disclosure, the propulsor may be referred to as a rotor, a prorotor, a propulsion assembly, or the like.

When the flight mode is the hovering mode according to a takeoff and landing situation or the like, the main wing tilting propulsor 38 and the tail wing tilting propulsor 42 may be tilted to be substantially parallel to a blade arrangement direction of the main wing non-tilting propulsor 40a by hinge coupling. When the flight mode is the cruising mode according to horizontal flight or the like, each of the main wing tilting propulsor 38 and the tail wing tilting propulsor 42 may also be tilted by hinge coupling to be spaced apart from each other by a predetermined angle in a blade arrangement direction. FIG. 2 illustrates that an assembly for tilting is formed using hinge coupling between a mount and a nacelle.

As another example, a tilting assembly may be implemented by other mechanisms that do not use hinge coupling. For example, a multi-joint linkage may be connected to each predetermined point of a nacelle and a mount that accommodate the modules of the main wing tilting propulsors 40a and 40b, and the nacelle or mount may not have a physically coupled portion. Accordingly, in the hovering mode, the multi-joint linkage may be expanded to pivot the main wing tilting propulsor 38 and the tail wing tilting propulsor 42 to be substantially perpendicular to the fuselage 32, and in the cruising mode, the multi-joint linkage may be contracted to pivot the main wing tilting propulsor 38 and the tail wing tilting propulsor 42 to be substantially parallel to the fuselage 32. The tilting of the main wing tilting propulsor 38 and the tail wing tilting propulsor 42 may be synchronized according to the flight mode, and the tilting of each propulsor may be adjusted differently according to the attitude control and flight situation in the same flight mode.

The main wing non-tilting propulsors 40a and 40b may be disposed at the ends of the booms protruding from the inboard front region and the outboard rear region of the main wing 34. The main wing non-tilting propulsors 40a and 40b may be formed as a dual propeller or a single propeller in which two propellers overlap each other, as illustrated in FIG. 2. The main wing non-tilting propulsors 40a and 40b are mainly activated in a hovering mode, but may be driven according to altitude control and flight conditions even in a cruising mode. In the present disclosure, the non-tilting propulsors 40a and 40b may also be referred to as lift rotors, lift assemblies, and the like.

Although the tilting and non-tilting propulsors are described in the present disclosure as being arranged as in FIG. 2, they are not limited to the arrangement of FIG. 2, and these propulsors may be arranged in other positions. In addition, although four tilting propulsors and two non-tilting propulsors are shown in FIG. 2, and they are not limited to the above-described numbers, they may be modified into various numbers. Modified embodiments related to the arrangement and number of the tilting propulsors and the non-tilting propulsors are illustrated in FIGS. 3 to 5, but they may be designed into various forms that are not mentioned in the present disclosure.

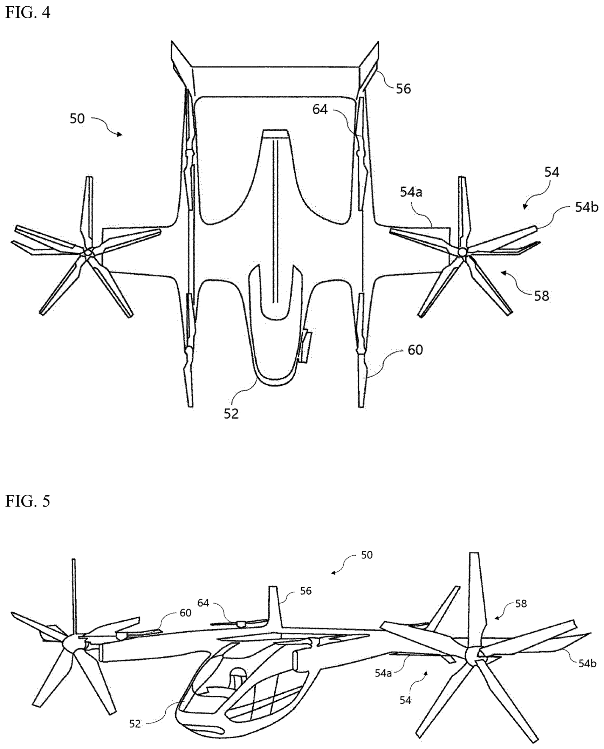

An air mobility apparatus according to other examples of the present disclosure will be described with reference to FIGS. 3 to 5. FIG. 3 shows a diagram illustrating an air mobility apparatus implementing a hovering mode as an air mobility apparatus according another example of the disclosure. FIG. 4 shows a diagram illustrating a top portion of an air mobility apparatus implementing a hovering mode. FIG. 5 shows a diagram illustrating an air mobility apparatus implementing a cruising mode as an air mobility apparatus according the another example of the invention.

The air mobility apparatus according to other examples of FIGS. 3 to 5 is substantially similar to the example of FIG. 2 except for the detailed configuration of the tilting propulsor. Hereinafter, descriptions of the same functions and members as those of FIG. 2 will be omitted, and the air mobility apparatuses according to other examples will be described focusing on their differences from FIG. 2.

An air mobility apparatus 50 of another example may include a fuselage 52, main wings 54 disposed on left and right sides of a central region of the fuselage 52, and a tail wing 56 connected to a rod perpendicular to an extending direction of the main wing 54 and disposed in an end region of the fuselage 52.

The main wing 54 may have an inboard region and an outboard region. A tilting propulsor 58 having a tilting rotor may be disposed in a front region of left and right outboards. The tilting propulsor 58 may be fixed to the main wing by a boom provided in the outboard region of the main wing. Non-tilting propulsors 60 and 64 arranged in the horizontal direction of the fuselage 52 are disposed in a front region and a rear region of rods extending in the left and right inboard regions and may also be referred to as lift propulsors.

Meanwhile, the outboard region of the main wing 54 is partitioned from a horizontal surface 54a of the inboard region to have a lift surface 54b, and the tilting propulsor 58 may be mounted on a boom protruding from the lift surface. The lift surface 54b may have a bent winglet at an tip of the wing. In one example, the tilting propulsor 58 and the lift surface 54b may be configured to rotate or move together. In another example that is different from FIGS. 3 to 5, when the lift surface 54b is separated from the boom, the tilting propulsor 58 may move or rotate with the lift surface except for a portion of the lift surface 54b including the fuselage 110. In yet another example, the tilted propulsor 58 may be operated such that only the hub and the blade move or rotate.

According to the above description, when the flight mode is a hovering mode, the tilting propulsor 58 may be tilted so as to be substantially parallel to the blade arrangement direction of the non-tilting propulsors 60 and 64, as shown in FIGS. 3 and 4. When the flight mode is a cruising mode according to horizontal flight or the like, the tilting propulsor 58 may also be tilted to be spaced apart from the blade arrangement direction by a predetermined angle, as shown in FIG. 5.

The air mobility apparatus 50 according to the present example may include a gear 66 for landing on a land and/or water that is telescoping or non-telescoping. The gear 66 may be disposed both in the front and back of the air mobility apparatus 30 and may include wheels, treads, pontoons, or other components that may help the air mobility apparatus land on a land and/or water. In addition, the air mobility apparatus 50 may include a stepper 68 and a side door that are retractable from the fuselage 52 when a passenger gets on or off.

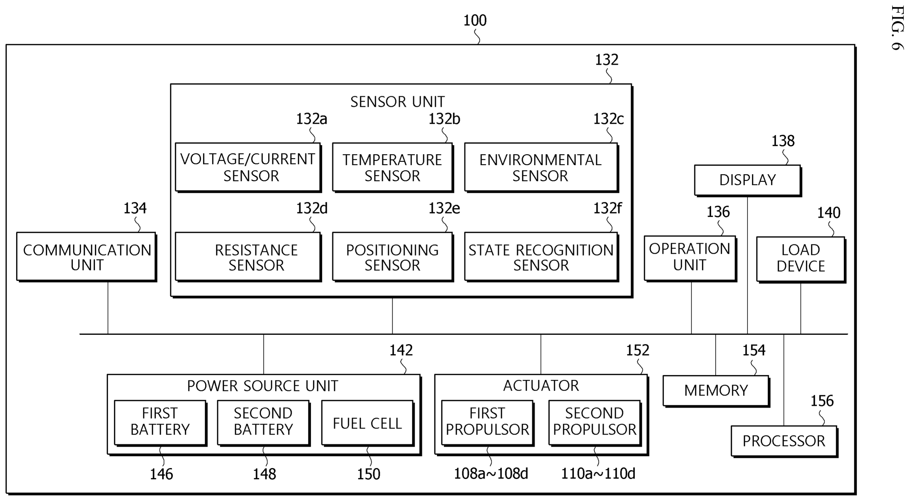

FIG. 6 shows a schematic diagram illustrating modules constituting an air mobility apparatus according to an embodiment of the present disclosure. Hereinafter, a VTOL air mobility apparatus having the motor propulsor illustrated in FIGS. 2 to 5 is mainly described, but the functions, modules, and devices of the air mobility apparatus described in the present disclosure are also applicable to other types of air mobility apparatuses as long as they are technically combinable. In addition, some of the descriptions of the functional modules in FIG. 6 are substantially the same as those in FIG. 1, and the same matters will be described briefly. In the present disclosure, the air mobility apparatus 100 is described as an example of the mobility apparatus, but implements according to the present disclosure may be applied to other types of mobility apparatuses, provided that they are not technically inconsistent. Furthermore, in the present disclosure, the air mobility apparatus 100 may also be referred to as the mobility apparatus.

The air mobility apparatus 100 may include a sensor unit 132, a communication unit 134, an operation unit 136, a display 138, a load device 140, a power source unit 142, an actuator 152, a memory 154, and a processor 156.

The sensor unit 132 may include various types of detectors that detect various states and situations occurring in the external and internal environments of the air mobility apparatus 100. The sensor unit 132 may acquire sensor data used for flight control, state data for detecting a state of a module constituting the air mobility apparatus 100, situation data for detecting a situation of a passenger and/or a luggage, and the like, and provide the data to a processor 156 that induces a predetermined function and operation.

Specifically, the sensor unit 132 may include a voltage/current sensor 132a, a temperature sensor 132b, an environmental sensor 132c, a resistance sensor 132d, a positioning sensor 132e, and a state recognition sensor 132f.

The voltage/current sensor 132a may detect, for example, an electrical state of at least one of an electric battery of the power source unit 142, a charging module thereof, and a motor and an inverter of propulsors 108a to 108d and 110a to 110d. The electric battery may be a secondary battery that is rechargeable from the outside but does not generate electric power by itself. The charging module of the battery is a battery having a self-generating capability, and the self-generating battery may supply electric power to the propulsors 108a to 108d and 110a to 110d. The self-generating battery is, for example, a fuel cell module, but is not limited thereto. The processor 156 may detect a flight mode, a flight control state, a battery control state, a motor control state, an inverter control state, and a failure/abnormality situation of these modules based on data detected from the voltage/current sensor 132a, for example, the electrical state and the amount of change of the battery, the motor, and the inverter.

The temperature sensor 132b may detect, for example, a temperature of at least one of a secondary battery of the power source unit 142, a self-generating battery, a motor and an inverter of the propulsors 108a to 108d and 110a to 110d, and a cooling system controlling a temperature of the propulsors 108a to 108d and 110a to 110d. In the case of the cooling system, the temperature sensor 132b may measure a temperature of a cooling medium circulating in the cooling system and may estimate a temperature of the motor and the inverter. The processor 156 may detect a flight mode, a flight control state, a battery control state, a motor control state, an inverter control state, and a failure/abnormality situation of these modules based on temperature data of the battery, the motor, and the inverter detected from the temperature sensor 132b.

The environment sensor 132c may include, for example, a camera, a radar sensor, a lidar sensor, or the like and may detect an external environment. The resistance sensor 132d may detect, for example, an operating resistance of at least one of a secondary battery of the power source unit 142, a self-generating battery, and a motor and an inverter of a propulsor 108a to 108d, 110a to 110d. The processor 156 may detect a flight mode, a flight control state, a control state of the modules, and a failure/abnormality situation of the modules based on resistance data of the battery, the motor, and the inverter detected from the resistance sensor 132d.

The positioning sensor 132e is a module for identifying the position of the air mobility apparatus 100 and may be configured as, for example, a GPS sensor or a GNSS sensor.

The state recognition sensor 132f may detect a motion according to an operation of an aircraft, a load applied to an actuator 152, and an altitude of the aircraft. The state recognition sensor 133f may detect a state of each of three axes of the fuselage 52, for example, yaw, pitch, and roll and output a motion state of the aircraft based on the above-described parameters. Such a state recognition sensor may include, for example, an IMU sensor, a gyro sensor, and the like. In addition, the state recognition sensor 132f includes an altimeter and may detect a change in altitude of an aircraft. In addition, the state recognition sensors 132f may include a load detection sensor that measures an aircraft load applied to, for example, at least one of the propulsor 146, the main wing 104, and the tail wing 106. The load detection sensor may be provided in a specific part of the fuselage. The aircraft load may be a force or a pressure applied to at least the actuator 152, the wings 104 and 106, and the fuselage 102 by an ambient airflow during flight.

The above-described data of the sensor unit 132 is merely exemplary and may further include sensor data for sensing various situations that are not listed here.

The operation unit 136 may include a module for receiving a flight control input of a pilot. As an example, the operation unit 136 may include at least one inceptor in the fuselage. In addition to a hardware device, the operation unit 136 may further include a user interface such as a soft key. The user interface may be implemented on, for example, a display 138. The display 138 may be displayed by the processor 156 to output a attitude state, a control state, path information, remaining energy information, a surrounding environment image obtained from the environment sensor 132c, and the like of the air mobility apparatus 100. Although the operation unit 126 for manual steering is provided in the present disclosure, autonomous flight may be performed at the request of a pilot.

The power source unit 142 may generate and supply power and electrical power for use by the propulsors 108a to 108d and 110a to110d and the load device 140. According to the embodiment of FIG. 6, the power source unit 142 is illustrated as having a first battery 146, a second battery 148, and a fuel cell 150.

The first battery 146 and the second battery 148 may be configured as homogeneous secondary batteries. The first battery 146 and the second battery 148 may be, for example, configured as either high-power batteries or high-energy batteries. High-power batteries have higher discharge characteristic values than high-energy batteries and may also be referred to as high-discharge batteries. High-energy batteries may be secondary batteries that have higher energy capacity than high-power batteries but have lower peak output characteristics compared to high-power batteries.

The high-power battery and the high-energy battery may be, for example, lithium-based batteries having different compositions or different composition ratios of the same composition. More specifically, the high-power battery or the high-energy battery may be fabricated as ternary nickel cobalt manganese (NCM) or nickel cobalt aluminum (NCA) batteries having different composition ratios.

Although the battery is illustrated in FIG. 6 as two electrical batteries, three or more batteries may be configured to supply power to first propulsors 108a to 108d and second propulsors 110a to 110d.

Although the fuel cell 150 is illustrated as a self-generating power source in the present disclosure, the fuel cell 150 may charge at least one of the first battery 146 and the second battery 148 according to a charging mode. The charging mode may be activated, for example, when a state of charge of the battery is a lower charging limit or when the air mobility apparatus 100 is operated in a high-power mode. The high-power mode may be, for example, a state in which the first propulsors 108a to 108d and the second propulsors 110a to 110d are operated in a hovering flight, and thus more power is required compared to a low-power mode. For example, the low-output mode may be a state in which, for example, the first propulsors 108a to 108d and the second propulsors 110a to 110d are operated in a cruising flight. The charging mode may be activated when the state of charge of the battery is the lower charging limit even in the low-power mode. In addition, the charging mode may be activated by detecting that power consumption due to an increase in current and temperature of the battery exceeds normal power of the battery that is generally consumed in the high-power mode and the low-power mode.

The actuator 152 may include a plurality of propulsors 108a to 108d and 110a to 110d and may also be referred to as an actuating unit. The plurality of propulsors 108a to 108d and 110a to 110d may be components corresponding to the driving unit 22 of FIG. 1 in the air mobility apparatus 100.

The propulsors 108a to 108d and 110a to 110d may include a propeller having a plurality of blades, a hub, a motor, an inverter, a propulsor cooling module, and the like. The motor may be configured as a dual three-phase motor for redundancy. Two inverters may be provided to correspond to each of the three-phase motors. The propulsor 152a and the motor will be described in detail later.

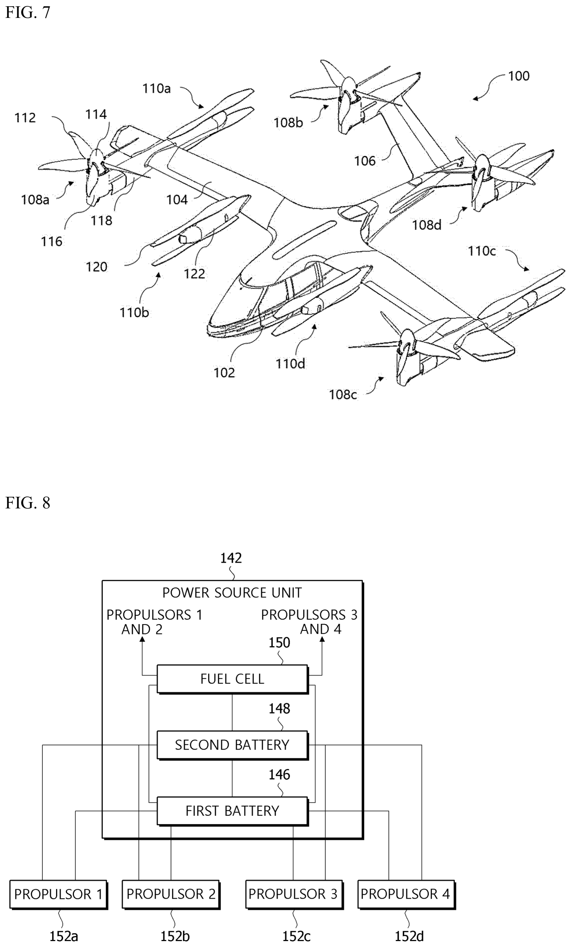

As in FIG. 7, the present disclosure illustrates an air mobility apparatus 100 having a tilting rotor type. In the case of a tilting rotor, at least some of the plurality of propulsors 108a to 108d and 110a to 110d may be tilted. As illustrated in FIG. 7 the first propulsors 108a to 108d may include a tiltable rotor, and the second propulsors 110a to 110d may include a fixed rotor. Here, the fixed rotor may mean a rotor having a blade arrangement that is not tilted during flight and is fixed.

The first propulsors 108a to 108d are installed in the main wing 104 and the tail wing 106 and may be hinge-coupled at a boom 118 extending from the wings. The first propulsors 108a to 108d have a nacelle 116 accommodating at least a motor that supplies power to the propeller 112, and the nacelle 116 may be tilted with respect to the boom 118. The position and tilting structure of the first propulsors 108a to 108d are not limited to the example of FIG. 7 and may be variously configured. The first propulsors 108a to 108d may be operated in a hovering mode, a cruising mode, and a transition section between these modes. For the hovering mode, the first propulsors 108a to 108d are operated with the blade arrangement shown in FIG. 7, while for the cruising mode, the first propulsors 108a to 108d may be operated with the same arrangement as the blades of the second propulsors 110a to 110d shown in FIG.7.

The second propulsors 110a to 110d may be lift rotors and may be fixedly installed in the boom 118 extending from the main wing 104. The positions and the tilting structure of the second propulsors 110a to 110d are not limited to the example of FIG. 7 and may be variously configured. The second propulsors 110a to 110d may be mainly used in a hovering mode but may be operated according to a flight situation caused in a horizontal flight. In the present disclosure, the first propulsors 108a to 108d and the second propulsors 110a to 110d may each be a single propulsor or may also be referred to as a propulsor set. For example, a first propulsor set including a plurality of tilting rotors may be abbreviated as a first propulsor 108a to 108d, and a second propulsor set including a plurality of fixed rotors may be referred to as a second propulsor 110a to 110d.

The tilting rotor type is different from that of FIG. 7 and may be a type in which all of the plurality of propulsors function as tilting rotors. The embodiment of the present disclosure may be applied to both the lift-and-cruise type and the multicopter type.

Meanwhile, the power source unit 142 may include a plurality of batteries for stability of energy supply to the first propulsors 108a to 108d and the second propulsors 110a to 110d, redundancy, and stable thrust. For the above-described purposes, the first battery 146 and the second battery 148 may be dually electrically connected to each propulsor 108a to 108d and 110a to 110d. The first battery 146, the second battery 148, and the fuel cell 150 may be installed in, for example, at least one of the fuselage 102, the main wing 106, or the tail wing 106.

FIG. 8 shows a diagram illustrating a layout of an energy supply architecture between a power source unit and a propulsor.

FIG. 8 illustrates a power source unit 142 including a first battery 146, a second battery 148, and a fuel cell 150. The first battery 146 and the second battery 148 may dually supply power to propulsors 152a to 152d regardless of flight mode. In one example, the fuel cell 150 may charge at least one of the first battery 146 and the second battery 148 in a charging mode. The charging mode may be activated, for example, when the state of charge of the battery is a lower charging limit or when the air mobility apparatus 100 is operating in a high-power mode. In another example, the fuel cell 150 may supplementally supply power to at least some of the propulsors 152a to 152d together with the first battery 146 and the second battery 148 in the charging mode. In yet another example, either the first battery 146 or the second battery 148 may charge the other battery in the charging mode as well.

Some of the propulsors 152a to 152d shown in FIG. 8 may correspond to the first propulsors 108a to 108d of FIG. 6, and the other propulsors 152a to 152d may correspond to the second propulsors 110a to 110d. Each of the propulsors 152a to 152d is not limited to the above-described correspondence, and may correspond to the first propulsors 108a to 108d and the second propulsors 110a to 110d depending on the design.

Referring to FIG. 6 again, the memory 154 may store an application and various types of data for flight control of the air mobility apparatus 100 and may load the application or read and write the data according to a request of the processor 156. The application and the data in the present disclosure may be software and data related to control of multiple power sources according to an operating situation of the air mobility apparatus 100. The data may include sensor data, state data of the air mobility apparatus, flight control parameters, and the like. Furthermore, in addition to the above-described application and data, the data and software mentioned in FIG. 1 may be stored and managed.

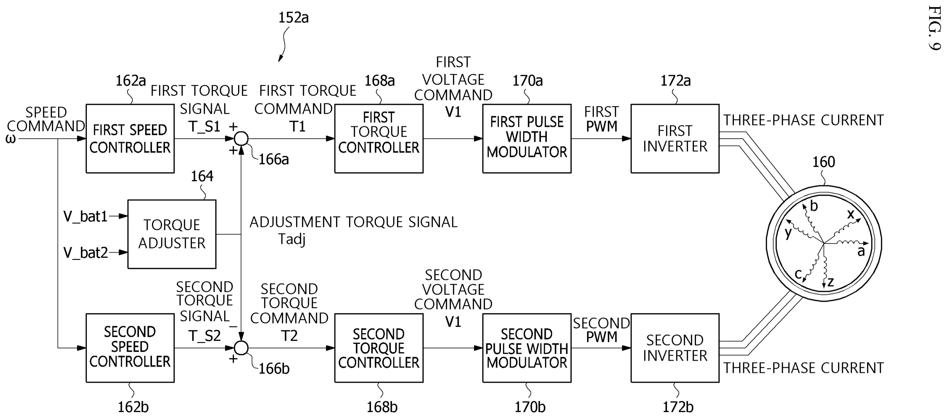

Regarding the present disclosure, the processor 156 may use applications, instructions, and data stored in the memory 154 to process flight control, path control, power/energy control through a powertrain, autonomous movement control, and the like. Specifically, the processor 156 may control at least the power source unit 142, the first propulsors 108a to 108d, and the second propulsors 110a to 110d. The processor 156 may include a controller shown in FIG. 9. As another example, the first propulsors 108a to 108d and the second propulsors 110a to 110d may include the controller shown in FIG. 8, and the processor 156 may use the controllers of the first propulsors 108a to 108d and the second propulsors 110a to 110d to control the motor 160. The control of the motor 160 will be described in detail below.

The processor 156 may be configured as a single processing unit or may include a plurality of processing units for distributed processing. The plurality of processing units may include an air processing system (APS), a flight control unit (FCC), a power control unit (PCU), a battery controller, a thermal management system (TMS), a full processing system (FPS), and the like, but are not limited thereto.

Meanwhile, although operations according to the present disclosure are processed in a distributed manner by a plurality of systems or controllers, for convenience of description, these may be collectively referred to as a processor 156. The processor 156 will described as processing functions, operations, and processes according to an embodiment of the present disclosure.

Meanwhile, the present disclosure mainly describes the air mobility apparatus 100 of the VTOL type. However, when another type of mobility apparatus, for example, a ground mobility apparatus, a robot, a drone, or the like is provided with a system similar to that of the present disclosure, the technical idea according to the examples and embodiments of the present disclosure may be applied to other types of mobility apparatuses.

Hereinafter, a motor-driven propulsor 152a according to an embodiment of the present disclosure provided in the air mobility apparatus 100 will be described with reference to FIG. 9. FIG. 9 shows a diagram illustrating module and motor control of the propulsor. In the following description, the propulsor 152a of FIG. 8 is illustrated, but the following description may be applied substantially equally to other propulsors 152b to 152d.

The motor-driven propulsor 152a includes a dual three-phase motor 160 for redundancy, and hereinafter, for convenience of description, the dual three-phase motor 160 may be abbreviated as a motor. The motor 160 may include: a stator having a first group winding (abc winding) and a second group winding (xyz winding) to have a dual three-phase structure; and a rotor that generating rotation through an electromagnetic interaction with the stator. The first group of winding (abc winding) may receive power from a first battery 146, and the second group of winding may receive power from a second battery 148. The rotor may be connected to a hub having a shaft, and the propeller may be coupled to the hub.

The propulsor 152a may be configured such that each module has a double structure in order to apply a three-phase current to the first group winding and the second group winding.

Specifically, the propulsor 152a may include a first speed controller 162a, a second speed controller 162b, a torque adjuster 164, a first adder 166a, a second adder 166b, a first torque controller 168a, and a second torque controller 168b. In FIG. 9, the controllers 162a, 162b, 168a, and 168b and the torque adjuster 164 described above are illustrated as being controlled by the processor 156 of FIG. 6. In another example, the controllers 162a, 162b, 168a, and 168b and the torque adjuster 164 may be configured as modules that constitute the processor 156, and the following description may apply substantially equally to other examples.

The first speed controller 162a and the second speed controller 162b may generate a first torque signal T_S1 and a second torque signal T_S2 based on the speed command ω. The speed command ω may include a rotation speed requested by the motor 160. The speed command ω may be generated based on an operation request signal for the motor. The operation request signal may be generated, for example, by at least one of flight state data, a state of the propulsor 152a, and a user's operation request. The flight state data may relate to, for example, a flight mode, a flight control state, a battery state, and the like. The state of the propulsor 152a may be related to, for example, a control state of the motor 160, an electrical state, and the amount of temperature torque change. In addition, the state of the propulsor 152a may be related to an operating state, an electrical state, and a temperature in the inverters 172a and 172b. The flight state data and the state of the propulsor 152a may be detected at regular time intervals so that the speed command ω may be periodically generated. The operation request may relate to, for example, a change in the user's flight attitude using an inceptor, a takeoff and landing operation, a change in speed, and the like. The first torque signal T_S1 and the second torque signal T_S2 may correspond to the first group winding and the second group winding, respectively.

The torque adjuster 164 may compare a first battery voltage V_bat1 of a first battery 146 and a second battery voltage V_bat2 of a second battery 148 to determine a battery voltage having a greater value from among the two battery voltages. The first battery voltage V_bat1 and the second battery voltage V_bat2 may be determined based on a first state of charge of the first battery 156 and a second state of charge of the second battery 18, respectively.

When the first battery voltage V_bat1 exceeds the second battery voltage V_bar2, the torque adjuster 164 may generate an adjustment torque signal Tadj based on the first battery voltage and the second battery voltage so as to have a first torque greater than a second torque. The first torque and the second torque may correspond to the first group winding and the second group winding, respectively. Although an example in which the first battery voltage V_bat1 is greater than the second battery voltage V_bat2 is described above, in an example in which the second battery voltage V_bat2 is greater than the first battery voltage V_bat1, the process may be performed in reverse to the above-described process.

The first adder 166a and the second adder 166b may generate a first torque command T1 and a second torque command T2 based on the first torque signal T_S1, the second torque signal T_S2, and the adjustment torque signal Tadj.

The first torque controller 168a may generate a first phase voltage command V1 corresponding to the first group winding based on the first torque command T1. The second torque controller 168b may generate a second phase voltage command V2 corresponding to the second group winding based on the second torque command T2.

In addition, the propulsor 152a may include a first pulse width modulator 170a, a second pulse width modifier 170b, a first inverter 172a, and a second inverter 172b.

The first pulse width modulator 170a and the second pulse width modifier 170b may generate a first PWM (first pulse width modulation signal) and a second PWM (second pulse width modulation signal) based on the first phase voltage command V1 and the second phase voltage command V2, respectively.

The first inverter 172a and the second inverter 172b may operate switches of the respective inverters according to the first PWM and the second PWM to transmit a three-phase current to the first group winding and the second group winding, respectively.

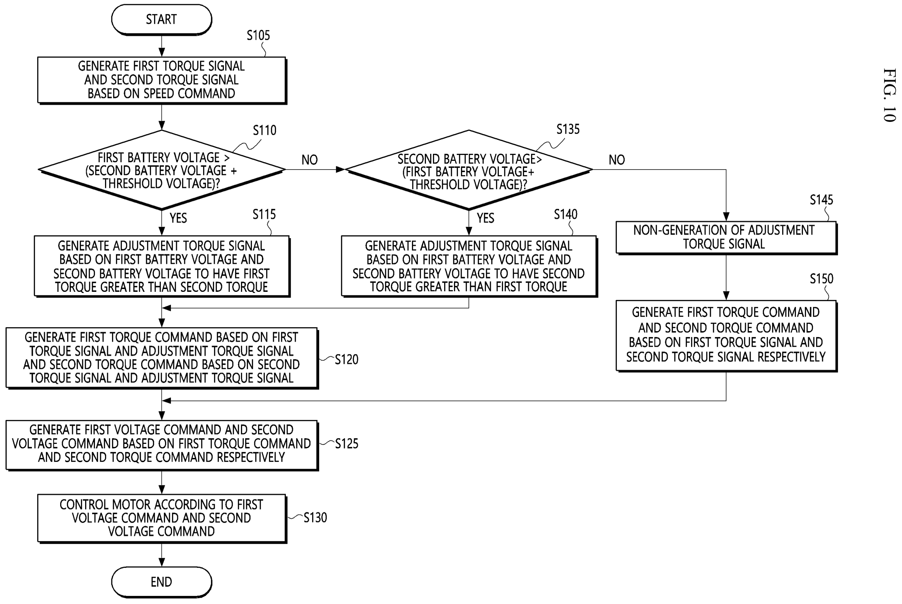

FIG. 10 shows a flowchart illustrating one control process of a motor-driven propulsor according to an embodiment of the present disclosure. The following control process will be described with reference to FIGS. 6 to 10.

Referring to S105, a processor 156 may generate a first torque signal T_S1 and a second torque signal T_S2 based on a speed command ω by using a first speed controller 162a and a second speed controller 162b. As described above, the speed command may be provided based on an operation instruction signal for the motor 160. Here, the first torque signal T_S1 and the second torque signal T_S2 may be generated as signals having the same torque.

Referring to S110, the processor 156 may determine whether a first battery voltage V_bat1 exceeds a sum of a second battery voltage V_bat2 and a threshold voltage, by using a torque adjuster 164.

The first battery voltage V_bat1 and the second battery voltage V_bat2 may be determined based on a first state of charge of a first battery 146 and a second state of charge of a second battery 148, respectively. The first battery 146 and the second battery 148 may be independently installed and operated. Each battery voltage may increase as the state of charge, that is, the charging amount increases, and it may decrease as the charging amount decreases.

Meanwhile, the consumption of the first battery 146 and the second battery 148 corresponding to a first inverter and a second inverter 172a and 172b, respectively, may be different due to a difference in resistance characteristics of each inverter and a difference in output torque of each inverter. Due to the different consumptions of the first battery 146 and the second battery 148, one battery may have a lower state of charge than the other battery. When the state of charge of a specific battery is excessively reduced, the specific battery may output a battery voltage less than or equal to a minimum operating voltage of the inverter. The inverter corresponding to the specific battery may enter an abnormal state and may not be operated. In view of the above description, the first battery voltage V_bat1 and the second battery voltage V_bat2 may be determined in consideration of the state of charge of each battery.

The use of a threshold voltage in the comparison between the first battery voltage V_bat1 and the second battery voltage V_bat2 may be to omit a process of generating an adjustment torque signal Tadj even with a small voltage difference, thereby reducing computational resources and processing time used for motor control. The threshold voltage may be set according to a design specification. Unlike the above-described example, when the threshold voltage is 0, a magnitude comparison between the first battery voltage V_bat1 and the second battery voltage V_bat2 may be performed.

Referring to S115, in response to the first battery voltage V_bat1 exceeding the sum, the processor 156 may generate the adjustment torque signal Tadj by using the torque adjuster 164 based on the first battery voltage V_bat1 and the second battery voltage V_bat2 so as to have a first torque greater than a second torque. The torque adjuster 166 may generate the adjustment torque signal Tadj by using, for example, proportional integral control. The proportional integral control may output the adjustment torque signal Tadj based on, for example, the first battery voltage V_bat1, the second battery voltage V_bat2, the three-phase currents of the first inverter 172a and the second inverter, and the output torque of the motor 160. The adjustment torque signal Tadj may have a torque value similar to that of the first torque signal T_S1 and the second torque signal T_S2.

Referring to S120, the processor 156 may generate a first torque command T1 and a second torque command T2 based on the first torque signal T_S1, the second torque signal T_S2, and the adjustment torque signal Tadj, by using the first adder 166a and the second adder 166b.

When the first battery voltage V_bat1 exceeds the second battery voltage V_bat2, the first torque command T1 corresponding to the first group winding may be generated by adding the adjustment torque signal Tadj to the first torque signal T_S1 in the first adder 166a. In addition, the second torque command T2 corresponding to the second group winding may be generated by subtracting the adjustment torque signal Tadj from the second torque signal T_S2 in the second adder 166b. Accordingly, the first torque command T1 is generated to have a difference of twice the adjustment torque signal Tadj compared to the second torque command T2, but the sum of the torques according to the first torque command T1 and the second torque command T2 may be equal to the total torque required by the motor according to the speed command ω.

Although the present disclosure illustrates that the first torque command T1 and the second torque command T2 are generated by summing and subtracting of the first torque signal T_S1, the second torque signal T_S2, and the adjustment torque signal Tadj, the present disclosure is not limited thereto, and the first torque command T1 and the second torque command T2 may be generated in various manners. Accordingly, the first adder 166a and the second adder 166b may be omitted, and the torque adjuster 164 may generate the first torque command T1 and the second torque command T2 based on the first battery voltage V_bat1, the second battery voltage V_bat2, the first torque signal T_S1, and the second torque signal T_S2. For example, the first torque command T1 and the second torque command T2 may be generated in a manner other than simple summing or subtraction, in particular, in a manner according to a ratio or a difference between the first battery voltage V_bat1 and the second battery voltage V_bat2. Accordingly, the first torque command T1 and the second torque command T2 may be generated such that the sum of the torques according to the first torque command T1 and the second torque command T2 may be equal to the total torque according to the speed command ω.

Referring to S125, the processor 156 may generate a first voltage command V1 and a second voltage command V2 based on the first torque command T1 and the second torque command T2, respectively, by using the first torque controller 168a and the second torque controller 168b. The first voltage command V1 is a first phase voltage command for generating a torque of the first group winding, and the first phase voltage command V1 may be generated as, for example, a d-q phase voltage command. The second voltage command V2 is a second phase voltage command for generating a torque of the second group winding, and the second phase voltage command V2 may be generated as, for example, a d-q phase pressure instruction.

Referring to S130, the processor 156 may control the motor 160 to generate a torque corresponding to the instruction in each of the first group winding and the second group winding based on the first phase voltage command V1 and the second phase voltage command V2, respectively. Specifically, the processor 156) may generate a first PWM and a second PWM based on the first voltage command V1 and the second phase voltage command V2, respectively, by using the first pulse width modulator 170a and the second pulse width modulator 170b. The processor 156 may generate a three-phase current corresponding to the first group winding and the second group winding based on the first PWM and the second PWM, respectively, by using the first inverter 172a and the second inverter 172b. The motor 160 may generate a torque for each group winding by using the three-phase current corresponding to each group winding.

Meanwhile, referring to S135 of FIG. 10, when the first battery voltage V_bat1 is less than or equal to the sum of the second battery voltage V_bat2 and the threshold voltage in S110, the processor 156 may determine whether the second battery voltage V_bat2 exceeds the sum of the first battery voltage V_bat1 and the threshold voltage, by using the torque adjuster 164.

Referring to S140, in response to the second battery voltage V_bat2 exceeding the sum, the processor 156 may generate an adjustment torque signal Tadj based on the first battery voltage V_bat1 and the second battery voltage V_bat2 to have a second torque greater than the first torque, by using the torque adjuster 164.

Thereafter, the processor 156 may perform the process of S120 to generate a first torque command T1 and a second torque command T2 based on the adjustment torque signal Tadj, the first torque signal T_S1, and the second torque signal T_S2 corresponding to the case where the second battery voltage V_bat2 is large. The process after S120 may be the same as described above.

Referring to S145, when the second battery voltage V_bat2 is equal to the sum in S135, the processor 156 may control the torque adjuster 164 not to generate an adjustment torque signal Tadj.

Referring to S150, the processor 156 may generate a first torque command T1 and a second torque command T2 based on the first torque signal T_S1 and the second torque signal T_S2, respectively, and input the first torque command T 1 and the second torque command T2 to the first torque controller 168a and the second torque controller 168b. Thereafter, the processor 156 may perform processes of S125 and S130.

The motor-driven propulsor control procedure according to FIG. 10 may be applied when the first battery 146 and the second battery 148 are not charged with a power source mounted on the air mobility apparatus 100, for example, the fuel cell 150, or when there is no power source charging the first battery 146 and the second battery 148 in the air mobility apparatus 110.

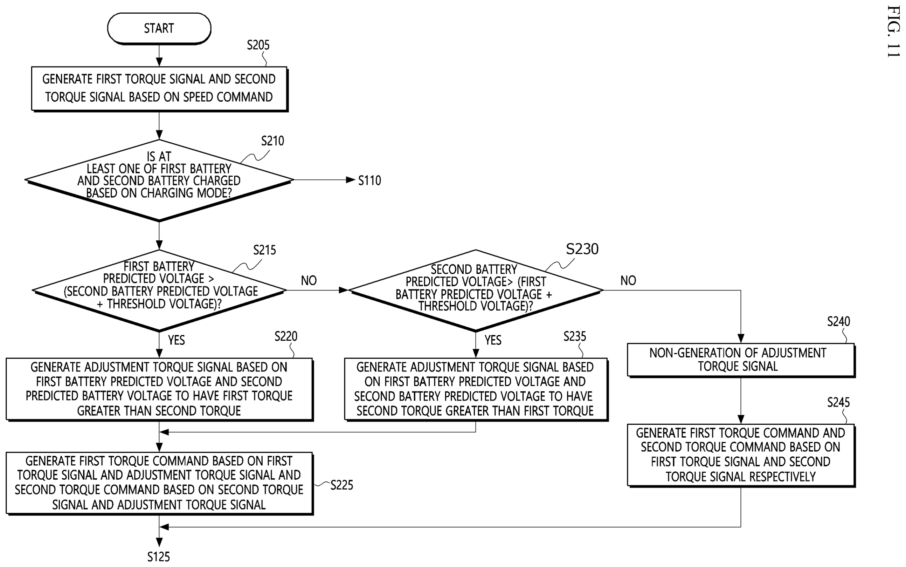

Hereinafter, referring to FIG. 11, a method of controlling a propulsor performed when at least one of the first battery 146 and the second battery 148 is charged by a power source, for example, the fuel cell 150, while the air mobility apparatus 100 is operating in flight or the like, will be described. FIG. 11 shows a flowchart illustrating another control process of a motor-driven propulsor according to an embodiment of the present disclosure. In the description of FIG. 11, matters the same as FIG. 10 will be briefly described, and the process that differs from FIG. 10 will mainly be described. In the present disclosure, the first battery 146 and the second battery may be homogeneous or heterogeneous secondary batteries. In the following, for convenience of description, a fuel cell 150 is illustrated as charging the batteries. However, the following description may also be applied when either one of the battery 146 and the second battery 148 charges the other of these batteries, or a battery associated with another propulsor charges the first battery 146 and the second battery 148.

Referring to S205, equally to S105, the processor 156 may generate a first torque signal T_S1 and a second torque signal T_S2 based on the speed command ω by using the first speed controller 162a and the second speed controller 162b.

Referring to S210, the processor 156 may detect whether at least one of the first battery 146 and the second battery 148 is charged with a power source, for example, a fuel cell 150, by a charging mode. When neither the first battery 146 nor the second battery 148 is charged with a fuel cell 150, the processor 156 may perform the process of S110 in FIG. 10 to execute the process subsequent to S110.

Referring to S215, the processor 156 may determine whether a first battery predicted voltage exceeds a sum of a second battery predicted voltage and a threshold voltage, by using the torque adjuster 164. For example, when the first battery 146 is charged from a fuel cell 150 by a charging mode and the second battery 148 is not charged, the first battery predicted voltage may be estimated based on an expected charge amount supplied from the fuel cell 150 during a predetermined time, a flight mode, and a flight control state. The second battery predicted voltage of the second battery 178 that is not charged may be the same as the second battery voltage described in FIG. 10. When both the first battery 146 and the second battery 148 are charged by a charging mode, the first battery predicted voltage and the second battery predicted voltage may be estimated as described above.

Referring to S220, when the first battery predicted voltage exceeds the sum, the processor 156 may generate an adjustment torque signal based on the first battery predicted voltage and the second battery predicted voltage to have a first torque greater than a second torque, similar to S115, by using the torque adjuster 164.

Referring to S225, the processor 156 may generate a first torque command T1 and a second torque command T2 based on the first torque signal T_S1, the second torque signal T_S2, and the adjustment torque signal Tadj by using the first adder 166a and the second adder 166b, similarly to S120. Thereafter, the processor 156 may perform the process of S125 in FIG. 10.

Meanwhile, referring to S230 of FIG. 11, when the first battery predicted voltage is less than or equal to the sum of the second battery predicted voltage and the threshold voltage in S215, the processor 156 may determine whether the second battery predicted pressure exceeds the sum of the first battery predicted pressure and the threshold voltage by using the torque adjuster 164.

Referring to S235, in response to the second battery predicted voltage exceeding the sum, the processor 156 may generate an adjustment torque signal based on the first battery predicted voltage and the second battery predicted voltage to have a first torque greater than a second torque, by using the torque adjuster 164. Thereafter, the processor 155 may perform the process of S225.

Referring to S240, when the second battery predicted voltage is equal to the sum in S230, the processor 156 may control the torque adjuster 164 not to generate an adjustment torque signal. Referring to S245, the processor 156 may generate a first torque command T1 and a second torque command T2 based on the first torque signal T_S1 and the second torque signal T_S2, respectively, and input the first torque command T1 and the second torque command T2 to the first torque controller 168a and the second torque controller 168b. Thereafter, the processor 156 may perform the process of S125.

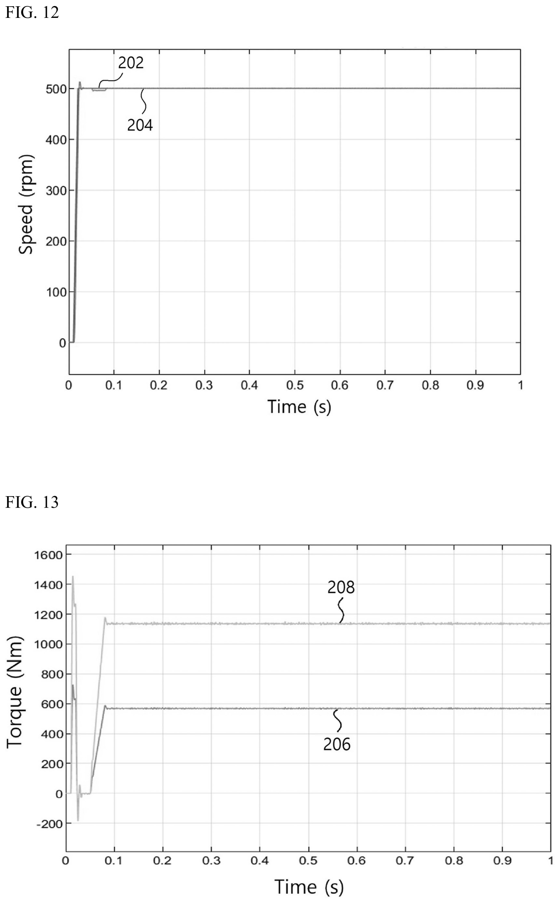

With reference to FIGS. 12 to 16, a method of controlling a motor-driven propulsor according to the present disclosure and a simulation result performed by a conventional method will be described. The simulation according to the present disclosure is performed in a situation where the first battery and the second battery are not charged with a power source. The simulation sets voltages of the first battery and the second battery to 730 V and 750 V, respectively. As shown in FIG. 12, a speed command 202 and an output speed 204 of the motor are set to be equally controlled to 500 rpm. FIG. 12 shows a diagram illustrating a speed command and an output speed of a motor applied to a simulation for motor control of the present disclosure in which torque adjustment is performed and motor control of a conventional example in which torque adjustment is not performed.

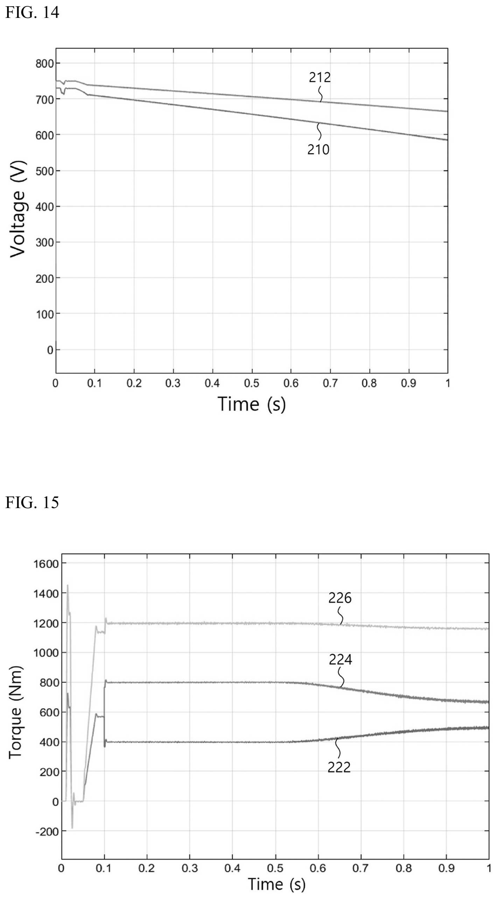

FIGS. 13 and 14 show diagrams illustrating inverter torque for each three-phase winding of a motor and use amount of each battery as simulation results of a conventional example.

FIG. 13 shows an inverter torque 206 and a torque sum corresponding to a first battery and a second battery. The inverter torque 206 is generated when the speed increases, and a load torque is shown from 0.05 seconds. It can be seen that the torque 206 of each inverter is the same in all time regions, and the sum of the inverter torques 206 is the same as the sum total torque 208 according to the speed command.

FIG. 14 shows that the use amount of the first battery voltage 210 associated with the first inverter is greater over time than that of the second battery voltage 212 associated with the second inverter. Accordingly, it can be seen that the voltage difference between the batteries is increased.

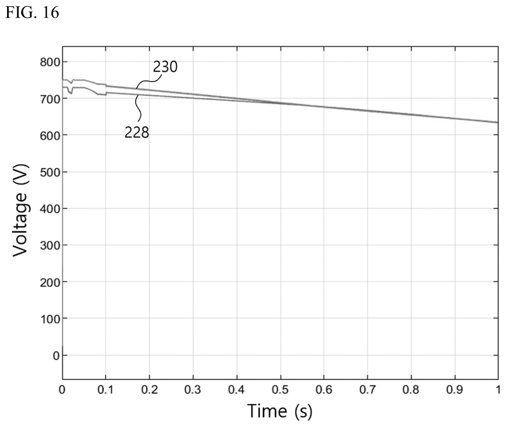

FIG. 15 and FIG. 16 show diagrams illustrating output torques for each three-phase winding of the motor and use amounts of the respective batteries as simulation results of the present disclosure.

As can be seen in FIG. 15, the torque adjuster is operated from 0.1 seconds, resulting in slight speed fluctuations with instantaneous changes. With the use of the torque adjuster, the first inverter torque 222 and the second inverter torque 224 change with the adjustment torque signal, while the sum of these torques may be constant. In addition, it can be seen that the sum of the torque 222 and 224 is equal to the total torque 226 according to the speed command.

As can be seen in FIG. 16, since the torque of each inverter is adjusted according to the first battery voltage 228 and the second battery voltage 230, the first battery voltage 228 and the second battery voltage 230 may also converge to a same value over time. Accordingly, excessive use of the first battery voltage is suppressed, and abnormal operation of motor control due to a drastic voltage decrease of the first battery may be prevented in advance.

According to the present disclosure, it is possible to provide a motor-driven propulsor that prevents abnormal operation of a motor in advance and ensures flight stability, and an air mobility apparatus including the same.

Effects that can be obtained in the present disclosure are not limited to the above-mentioned effects, and other effects that are not mentioned will be clearly understood by those skilled in the art from the following description.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some of the steps.

The various embodiments of the present disclosure are not a list of all possible combinations and are intended to describe representative aspects of the present disclosure, and the matters described in the various embodiments may be applied independently or in combination of two or more.

In addition, various embodiments of the present disclosure may be implemented in hardware, firmware, software, or a combination thereof. In the case of implementing the present invention by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

Furthermore, a mobility apparatus according to a first aspect of the present invention may comprise: a propulsor including a motor including a stator including a first group winding and a second group winding to have a dual three-phase structure and a rotor generating rotation through an electromagnetic interaction with the stator, the propulsor being disposed on a body and generating lift and thrust; a first battery and a second battery supplying power to the propulsor; and at least one processor executing at least one instruction to control the propulsor, the first battery, and the second battery; wherein the at least one processor is configured to: determine whether a first battery voltage applied to the first group winding exceeds a second battery voltage applied to the second group winding; generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and control the motor based on the first torque command and the second torque command.

A mobility apparatus according to a second aspect, wherein, in the generating the first torque command and the second torque command, the at least one processor may be configured to generate the first torque command and the second torque command using proportional-integral control.

A mobility apparatus according to a third aspect, wherein the at least one processor may be further configured to generate, based on the first battery voltage and the second battery voltage being equal, a first torque command and a second torque command in consideration of a first torque signal and a second torque signal that are each provided according to a speed command for operation of the motor; and the first torque signal and the second torque signal correspond to the first group winding and the second group winding, respectively.

A mobility apparatus according to a fourth aspect, wherein, in the controlling the motor, the at least one processor may be configured to: generate, based on the first torque command and the second torque command, a first phase voltage command corresponding to the first group winding and a second phase voltage command corresponding the second group winding, and control the motor based on the first phase voltage command and the second phase voltage command.

A mobility apparatus according to a fifth aspect, wherein the first battery and the second battery may be comprised of homogenous batteries that are not charged by a power source internal to the mobility apparatus.

A mobility apparatus according to a sixth aspect, wherein at least one of the first battery and the second battery may be configured to be charged with a power source internal to the mobility apparatus, the at least one processor is further configured to: determine whether at least one of the first battery and the second battery is charged by the power source; and determine, based on at least one of the first battery and the second battery being charged by the power source, whether a first battery predicted voltage applied to the first group winding exceeds a second battery predicted voltage applied to the second group winding; and generate, based on the first battery predicted voltage exceeding the second battery predicted voltage, a first torque command and a second torque command in consideration of the first predicted battery voltage and the second predicted battery voltage to have the first torque that is set to be greater than the second torque; and the at least one of the first battery predicted voltage and the second battery predicted voltage is determined based on a predicted state of charge of a battery in accordance with charging with the power source.

## Claims

1. A propulsor, comprising:
a motor including a stator including a first group winding and a second group winding to have a dual three-phase structure and a rotor generating rotation through an electromagnetic interaction with the stator; and
at least one processor executing at least one instruction to control the motor,
wherein the at least one processor is configured to:
determine whether a first battery voltage applied to the first group winding exceeds a second battery voltage applied to the second group winding;
generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and
control the motor based on the first torque command and the second torque command.

2. The propulsor of claim 1, wherein the first battery voltage and the second battery voltage are determined based on a first state of charge of a first battery and a second state of charge of a second battery, respectively.

3. The propulsor of claim 1 or 2, wherein, in the determining whether the first battery voltage exceeds the second battery voltage, the at least one processor is configured to determine whether the first battery voltage exceeds a sum of the second battery voltage and a threshold voltage.

4. The propulsor of anyone of the preceding claims, wherein, in the generating the first torque command and the second torque command, the at least one processor is configured to:
generate an adjustment torque signal based on the first battery voltage and the second battery voltage to have the first torque greater than the second torque; and
generate the first torque command and the second torque command based on a first torque signal corresponding to the first group winding, a second torque signal corresponding to the second group winding, and the adjustment torque signal, and
the first torque signal and the second torque signal are provided based on a speed command for operation of the motor.

5. The propulsor of claim 4, wherein the first torque signal and the second torque signal are provided as signals having a same torque, and
the first torque command is generated by adding the adjustment torque signal to the first torque signal, and the second torque command is generated by subtracting the adjustment torque signal from the second torque signal.

6. The propulsor of anyone of the preceding claims, wherein, in the generating the first torque command and the second torque command, the at least one processor is configured to generate the first torque command and the second torque command using proportional-integral control.

7. The propulsor of anyone of the preceding claims, wherein the at least one processor is further configured to generate, based on the first battery voltage and the second battery voltage being equal, a first torque command and a second torque command in consideration of a first torque signal and a second torque signal that are each provided according to a speed command for operation of the motor; and
the first torque signal and the second torque signal correspond to the first group winding and the second group winding, respectively.

8. The propulsor of anyone of the preceding claims, wherein, in the controlling the motor, the at least one processor is configured to:
generate, based on the first torque command and the second torque command, a first phase voltage command corresponding to the first group winding and a second phase voltage command corresponding the second group winding; and
control the motor based on the first phase voltage command and the second phase voltage command.

9. The propulsor of anyone of the preceding claims, wherein a first battery outputting the first battery voltage and a second battery outputting the second battery voltage are comprised of homogeneous batteries that are not charged by a power source internal to an apparatus including the propulsor.

10. The propulsor of anyone of the preceding claims, wherein at least one of the first battery outputting the first battery voltage and the second battery outputting the second battery voltage is configured to be charged by a power source internal to an apparatus including the propulsor,
the at least one processor is further configured to:
determine whether at least one of the first battery and the second battery is charged by the power source;
determine, based on at least one of the first battery and the second battery being charged by the power source, whether a first battery predicted voltage applied to the first group winding exceeds a second battery predicted voltage applied to the second group winding; and
generate, based on the first battery predicted voltage exceeding the second battery predicted voltage, a first torque command and a second torque command in consideration of the first predicted battery voltage and the second predicted battery voltage to have the first torque that is set to be greater than the second torque, and
the at least one of the first battery predicted voltage and the second battery predicted voltage is determined based on a predicted state of charge of a battery in accordance with charging with the power source.

11. A mobility apparatus, comprising:
a body;
a propulsor according to anyone of the preceding claims, the propulsor being disposed on the body and generating lift and thrust;
a first battery and a second battery supplying power to the propulsor; and
at least one processor executing at least one instruction to control the propulsor, the first battery, and the second battery;
wherein the at least one processor is configured to:
determine whether a first battery voltage applied to the first group winding exceeds a second battery voltage applied to the second group winding;
generate, based on the first battery voltage exceeding the second battery voltage, a first torque command and a second torque command in consideration of the first battery voltage and the second battery voltage to have a first torque corresponding to the first group winding that is set to be greater than a second torque corresponding to the second group winding; and
control the motor based on the first torque command and the second torque command.

12. The mobility apparatus of claim 11, wherein the first battery voltage and the second battery voltage are determined based on a first state of charge of the first battery and a second state of charge of the second battery, respectively.

13. The mobility apparatus of claim 11 or 12, wherein, in the determining whether the first battery voltage exceeds the second battery voltage, the at least one processor is configured to determine whether the first battery voltage exceeds a sum of the second battery voltage and a threshold voltage.

14. The mobility apparatus of anyone of claims 11 to 13, wherein, in the generating the first torque command and the second torque command, the at least one processor is configured to:
generate an adjustment torque signal based on the first battery voltage and the second battery voltage to have the first torque greater than the second torque; and
generate the first torque command and the second torque command based on a first torque signal corresponding to the first group winding, a second torque signal corresponding to the second group winding, and the adjustment torque signal; and
the first torque signal and the second torque signal are provided based on a speed command for operation of the motor.

15. The mobility apparatus of claim 14, wherein the first torque signal and the second torque signal are provided as signals having a same torque, and
the first torque command is generated by adding the adjustment torque signal to the first torque signal, and the second torque command is generated by subtracting the adjustment torque signal from the second torque signal.
